# FASCICULE DE BREVET EUROPEEN

(11) **EP 2 189 343 B1**
(45) Date de publication et mention de la délivrance du brevet: **18.01.2012**
(21) Numéro de dépôt: 09172225.6
(22) Date de dépôt: 05.10.2009
(51) Int. Cl.: B60T 8/1755

(54) **Procédé de correction automatique de trajectoire**
Automatisches Korrekturverfahren der Bewegungsbahn
Method for automatic trajectory correction

(30) Priorité: 25.11.2008 FR 0806657
(43) Date de publication de la demande: 26.05.2010
(73) Titulaire: Robert Bosch GmbH, 70442 Stuttgart (DE)
(72) Inventeur: Bouchard, Christophe, 95100, ARGENTEUIL (FR)
(74) Mandataire: Hurwic, Aleksander Wiktor

(56) Documents cités:
- EP-A- 0 970 876
- EP-A- 1 000 838
- DE-A1- 4 305 155
- DE-A1- 19 617 590
- US-A1- 2007 244 606
- US-B1- 6 195 606
- US-B1- 6 547 343

## Description

La présente invention se rapporte à un procédé de correction automatique de trajectoire. Plus particulièrement l'invention se rapporte à un procédé de correction automatique de trajectoire de véhicule lors d'un écartement du véhicule par rapport à une trajectoire souhaitée. L'invention est décrite pour le domaine de l'automobile mais peut être appliquée à d'autres domaines.

Durant l'utilisation d'un véhicule, il peut arriver qu'un conducteur souhaite effectuer un virage et que, selon les conditions dans lesquelles ce virage a lieu, le véhicule s'écarte de la trajectoire souhaitée. Les deux principales manières dont un véhicule peut s'écarter de la trajectoire désirée durant un virage sont appelées survirage et sous virage.

Un survirage correspond à une rotation du véhicule, autour d'un axe vertical passant par son centre de gravité, plus importante que celle ayant normalement lieu selon la trajectoire souhaitée. Une telle rotation correspond à un tête à queue. Inversement, un sous virage a lieu lorsque le véhicule ne tourne pas assez par rapport à la trajectoire souhaitée par le conducteur. Typiquement, le véhicule effectue un « tout droit » là où il devrait tourner.

Plusieurs solutions telles que décrites dans EP 1 000 838, EP 0 970 876, DE 43 05 155, DE 196 17 590, US 6 195 606, US 6 547 343 ou US 2007/244606 sont connues de l'homme du métier afin d'éviter au véhicule de s'écarter de la trajectoire souhaitée ou, à défaut, pour rattraper le plus rapidement possible un tel écart. Le système le plus fréquemment utilisé est un système de contrôle dynamique de trajectoire ESP (Electronic Stability Program en terminologie anglo-saxonne). Le système ESP est un système qui permet d'éviter et/ou de corriger les instabilités du véhicule. Ce système est lié à un système de commande de roues du véhicule, notamment à un système de freinage.

Pour pouvoir intervenir sur le comportement du véhicule et pour pouvoir élaborer des commandes permettant au véhicule de conserver ou rattraper la trajectoire souhaitée par le conducteur, le système ESP doit utiliser un grand nombre d'informations. Ces informations concernent aussi bien les caractéristiques que le comportement du véhicule.

Pour obtenir ces informations, un véhicule est équipé de différents capteurs. On trouve ainsi notamment des capteurs de vitesse de roues, un capteur d'accélération latérale, un capteur de lacet et/ou un capteur de rotation de l'arbre de direction. A partir de ces informations, le système ESP effectue des calculs permettant de déterminer si il existe un écart entre d'une part une trajectoire souhaitée par le conducteur et d'autre part une trajectoire réelle du véhicule. Le système ESP défini des ordres à appliquer par le système de freinage suite à ces calculs.

Pour déterminer si il existe un écart entre la trajectoire souhaitée et la trajectoire réelle, les systèmes ESP actuels utilisent une mesure de lacet du véhicule. La mesure de lacet du véhicule correspond à la rotation du véhicule autour d'un axe vertical passant par le centre de gravité du véhicule. Une mesure de lacet théorique peut ainsi être définie par rapport à la trajectoire souhaitée. La trajectoire souhaitée par le conducteur est déterminée par différents paramètres. Les principaux paramètres de détermination de la trajectoire souhaitée sont un angle de rotation d'un volant, une vitesse du véhicule ainsi que des caractéristiques techniques du véhicule. Ainsi chaque trajectoire souhaitée correspond à une mesure de lacet théorique particulière.

Durant un virage, la mesure de lacet prend plusieurs tendances. Cette mesure de lacet augmente dans une entrée de virage, reste stable pendant le virage, et diminue pour revenir à une valeur nulle en sortie de virage. Lors d'un survirage, le lacet augmente plus que si le véhicule avait la trajectoire souhaitée. Dans un sous virage au contraire, le lacet n'augmente pas autant que si le véhicule avait la trajectoire souhaitée.

Les systèmes ESP actuels contrôlent que le véhicule ne s'écarte pas de la trajectoire souhaitée en observant un lacet réel mesuré par un capteur. Ce lacet réel est comparé au lacet théorique afin de déterminer si il existe ou non un écart entre la trajectoire souhaitée et la trajectoire réelle du véhicule. Si le lacet réel est supérieur au lacet théorique, les systèmes ESP actuels détectent un sur virage. Inversement si le lacet mesuré est inférieur au lacet théorique, les systèmes ESP actuels détectent un sous virage.

La correction effectuée par le système ESP se traduit par une montée en pression hydraulique dans le système de freinage d'une ou plusieurs roues, c'est à dire un freinage d'une ou plusieurs roues. Cette montée en pression est indépendante des actions du conducteur sur le système de freinage du véhicule. Cependant, il convient que le système ESP n'intervienne que dans les cas absolument nécessaires où le conducteur ne pourra pas redresser la situation dans laquelle se trouve le véhicule sans agir lui-même sur les freins. Il faut donc qu'un seuil d'intervention du système ESP soit défini de façon adapté au véhicule pour un conducteur standard. Si le lacet réel dépasse ce seuil lors d'un survirage, le système effectue un freinage uniquement sur les roues extérieures du véhicule. Ce freinage sur les roues extérieures produit une force de rotation inverse à celle du lacet ayant lieu lors des survirages afin de remettre le véhicule sur la trajectoire souhaitée. Inversement, lors d'un sous virage, un freinage est effectué sur les roues intérieures du véhicule pour ramener ledit véhicule sur la trajectoire souhaitée.

Cependant, une telle solution n'est pas fiable. En effet, pour déterminer la trajectoire réelle du véhicule, il est nécessaire de connaître la mesure de lacet mais il est aussi nécessaire de connaître une dérive du véhicule. La dérive en un point du véhicule correspond à la vitesse latérale du véhicule en ce point divisé par la vitesse longitudinale du véhicule en ce point. La dérive du véhicule est en fait estimée à partir d'un modèle véhicule, typiquement une table de données intégrant les différentes valeurs de dérives possibles selon les situations. Lorsque le lacet augmente jusqu'à dépasser la valeur seuil mais que la dérive estimée sur l'essieu arrière augmente elle aussi, le véhicule effectue un mouvement en crabe, ou une ovalisation de sa trajectoire. Les roues arrière sont alors plus éloignées de la trajectoire souhaitée que les roues avant. Cette différence entre les roues avant et les roues arrière peut avoir lieu malgré un lacet mesuré correspondant au lacet de la trajectoire souhaitée.

Lors d'une ovalisation de la trajectoire, un système ESP classique corrige le lacet en ordonnant une montée en pression du groupe hydraulique de freinage sur les roues extérieures. Cette augmentation de pression est très brève représentant le temps pour le véhicule de revenir à un lacet correspondant à la rotation autour l'axe vertical passant par son centre de gravité de la trajectoire souhaitée. Ainsi, dès que la mesure de lacet du véhicule redescend en dessous de la valeur seuil, le système ESP arrête le freinage sur les roues extérieures. Cependant, si le lacet mesuré correspond bien au lacet de la trajectoire souhaitée, la dérive de l'essieu arrière a provoqué une ovalisation de la trajectoire réelle, telle que le véhicule se déplace en crabe en s'éloignant de la trajectoire souhaitée. Dans une telle situation, un système ESP classique n'est donc pas apte à corriger la trajectoire prise par la voiture.

Pour résoudre ce problème, l'invention prévoit de ne pas prendre seulement en compte le lacet du véhicule pour analyser l'écartement du véhicule de la trajectoire souhaitée. Le procédé selon l'invention prévoit, lors d'un dépassement de la valeur seuil par le lacet réel, de déclencher la correction classique prévue par le système ESP, c'est-à-dire une montée en pression du groupe hydraulique de freinage sur les roues extérieures, mais de vérifier simultanément la valeur de la dérive. Plus particulièrement, le procédé selon l'invention prévoit de surveiller la dérive à partir du moment où le lacet a dépassé la valeur de seuil. Une augmentation de la dérive après un dépassement du seuil du lacet correspondrait à une ovalisation de la trajectoire. Une telle ovalisation de la trajectoire est traitée de la même manière qu'un tête à queue, c'est-à-dire avec une montée en pression des groupes hydraulique de freinage sur les roues extérieures. Le procédé selon l'invention prévoit donc d'observer la dérive du véhicule après dépassement de la valeur seuil par la mesure de lacet. Le système ESP selon l'invention définit alors la réaction de freinage en fonction du dépassement de seuil par le lacet du véhicule mais aussi en fonction de la valeur de la dérive après ce dépassement.

L'invention a donc pour objet un procédé de correction automatique de trajectoire d'un véhicule, ledit véhicule comportant un dispositif ESP, comportant
- une étape de détermination d'une mesure de lacet,
- une étape de comparaison de la mesure de lacet à une valeur seuil,
- une étape d'estimation d'une valeur de dérive, caractérisé en ce qu'il comporte
- une étape de détermination d'une valeur de dérive initiale, correspondant à la dérive à un instant où le lacet dépasse la valeur seuil,
- une étape de comparaison entre la dérive et de la dérive initiale,
- une étape de réaction de freinage correspondant à une montée en pression hydraulique dans des systèmes hydraulique de freinage, la réaction de freinage étant effectuée en fonction du lacet et de la dérive
- une étape de maintien de la réaction de freinage en fonction de la dérive uniquement, si le lacet réel diminue sous la valeur seuil.

Un mode préférentiel de réalisation de l'invention prévoit que lorsque le lacet est supérieur à la valeur seuil et que la dérive est inférieure à la dérive initiale, la réaction de freinage est fonction de la différence entre le lacet et la valeur seuil.

Un mode préférentiel de réalisation de l'invention prévoit que lorsque le lacet est supérieur à la valeur seuil et que la dérive est supérieure à la dérive initiale, la réaction de freinage est fonction de la différence entre la dérive et la dérive initiale et de la différence entre le lacet et la valeur seuil.

Un mode préférentiel de réalisation de l'invention prévoit que lorsque le lacet redescend sous la valeur seuil, si la dérive est supérieure ou égale à la dérive initiale, la réaction de freinage est fonction de la différence entre la dérive et la dérive initiale.

Un mode préférentiel de réalisation de l'invention prévoit que la fin de réaction de freinage, c'est à dire lorsque le lacet est repassé sous la valeur seuil et que la différence entre la dérive est inférieure à la dérive initiale, est progressive jusqu'à ce que ladite réaction de freinage soit nulle

L'invention sera mieux comprise à la lecture de la description qui suit et à l'examen des figures qui l'accompagnent. Celles-ci ne sont présentées qu'à titre indicatif et nullement limitatif de l'invention. Les figures montrent :

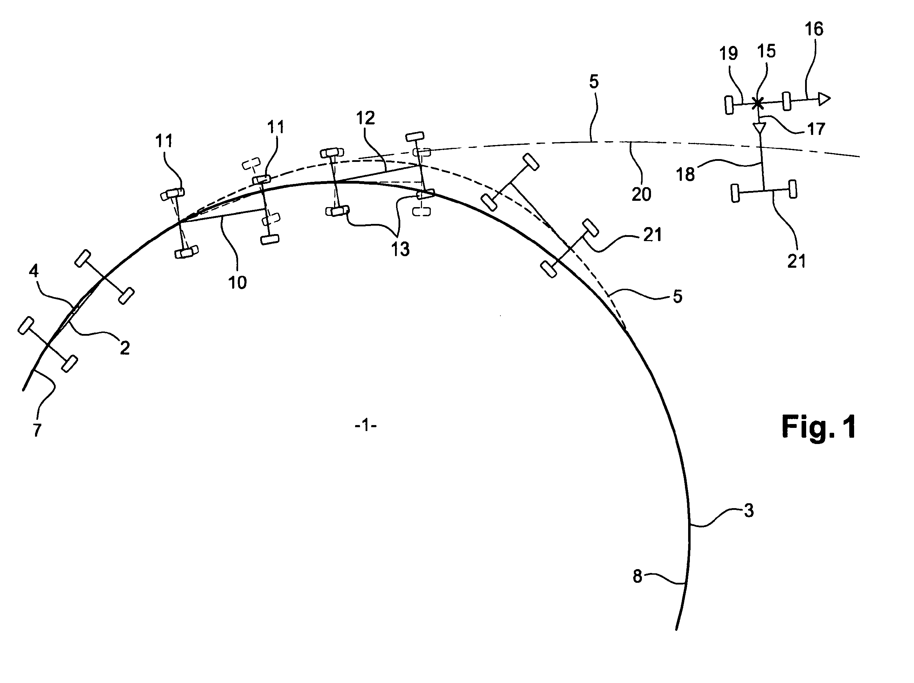

- Figure 1 : Une vue schématique d'une trajectoire souhaitée de véhicule ainsi que des orientations possible d'un véhicule désirant suivre cette trajectoire en situation normale, en situation de sur virage, en situation de sous virage, en situation d'ovalisation de la trajectoire avec un système ESP classique et en situation d'ovalisation de la trajectoire selon l'invention.

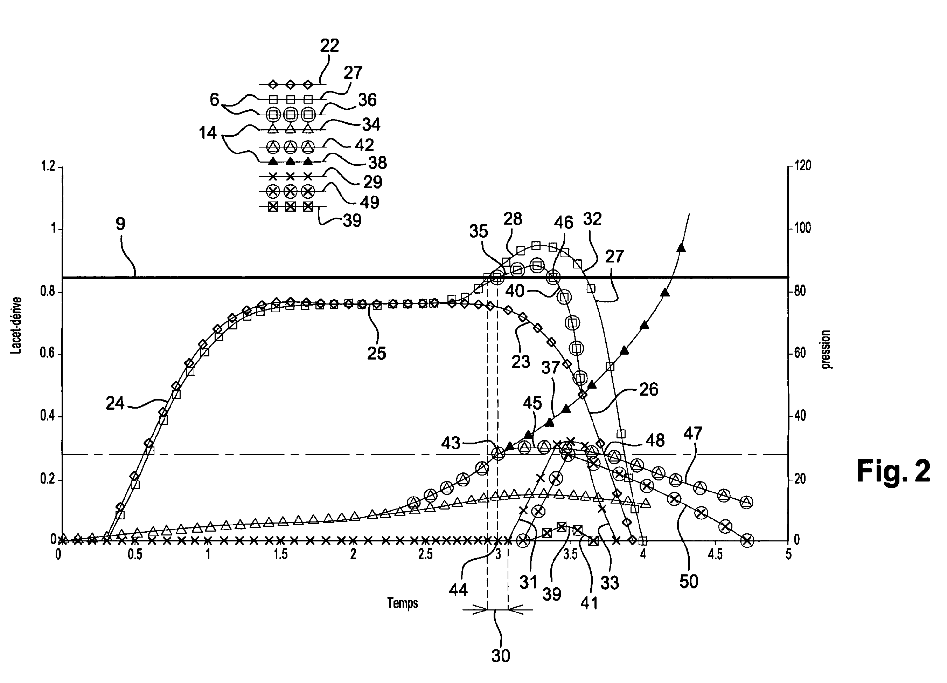

- Figure 2 : Un graphique du comportement du véhicule dans un Système ESP classique sans ovalisation de la trajectoire, avec ovalisation de la trajectoire, et le comportement du véhicule avec le procédé selon l'invention avec une ovalisation de la trajectoire.

Les références listées ci-dessous correspondent aux différents éléments du procédé selon l'invention et du dispositif mettant en oeuvre ce procédé selon l'invention.
1 - Virage
2 - Véhicule
3 - Trajectoire souhaitée
4 - Système ESP
5 - Trajectoire réelle
6 - lacet du véhicule
7 - Entrée de virage
8 - Sortie de virage
9 - Valeur seuil
10 - Véhicule en survirage
11 - Roues extérieures du véhicule
12 - Véhicule en sous virage
13 - Roues intérieures du véhicule
14 - Dérive
15 - Point du véhicule
16 - Vitesse latérale en 15
17 - Vitesse longitudinale en 15
18 - Véhicule en ovalisation
19 - Essieu arrière
20 - Ovalisation de la trajectoire
21 - Essieu avant
22 - Lacet théorique
23 - Courbe d'évolution du lacet théorique
24 - Croissance du lacet théorique
25 - Stabilité du lacet théorique
26 - Décroissance du lacet théorique
27 - Lacet réel en survirage seul
28 - Augmentation du lacet réel 27
29 - Pression durant un survirage seul
30 - Retard de réaction
31 - Augmentation de la pression 29
32 - Diminution du lacet réel 27
33 - Diminution de la pression 29
34 - Dérive réelle en survirage simple
35 - Augmentation du lacet réel en ovalisation de la trajectoire
36 - Lacet réel en ovalisation de la trajectoire
37 - Augmentation de la dérive en ovalisation de la trajectoire sans procédé selon l'invention
38 - Dérive réelle en ovalisation de la trajectoire sans procédé selon l'invention
39 - Pression en ovalisation de la trajectoire sans procédé selon l'invention
40 - Diminution du lacet réel 36
41 - Diminution de la pression 39
42 - Dérive réelle en ovalisation de la trajectoire selon le procédé selon l'invention
43 - Dérive initiale
44 - Instant/ moment durant lequel le lacet réel 36 passe la valeur seuil 9
45 - Augmentation de la dérive réelle 42
46 - Diminution du lacet réel 36 sous la valeur seuil 9
47 - Diminution de la dérive réelle 42
48 - Diminution de la dérive réelle sous la dérive initiale
49 - Pression en ovalisation de la trajectoire selon le procédé selon l'invention
50 - Diminution de la pression 49 en fin de réaction de freinage en ovalisation de la trajectoire selon le procédé selon l'invention

La figure 1 représente une vue schématique d'une trajectoire souhaitée de véhicule ainsi que des orientations possible d'un véhicule désirant suivre cette trajectoire en situation normale, en situation de sur virage, en situation de sous virage, en situation d'ovalisation de la trajectoire avec un système ESP classique et en situation d'ovalisation de la trajectoire selon l'invention.

Lors d'un virage 1, le conducteur d'un véhicule 2 définit une trajectoire qu'il souhaite faire prendre au véhicule 2. Cette trajectoire est appelée trajectoire souhaitée 3. Un système de contrôle dynamique de trajectoire ESP 4 doit pouvoir empêcher un écartement de la trajectoire souhaitée 3 ou, au pire, rattraper le plus rapidement possible cette trajectoire souhaitée 3 lorsque le véhicule s'en écarte. Pour fonctionner correctement un système ESP 4 doit connaître, et donc calculer, cette trajectoire souhaitée 3. La trajectoire souhaitée 3 est définie en fonction de plusieurs paramètres. Ces paramètres sont principalement un angle d'inclinaison du volant du véhicule, une vitesse du véhicule ainsi que des caractéristiques du véhicule 2 (poids du véhicule, centre de gravité du véhicule...).

De plus, le système ESP 4 doit reconnaître si une trajectoire réelle 5 du véhicule 2, c'est-à-dire la trajectoire prise par le véhicule 2 durant le virage 1, s'écarte ou non de la trajectoire souhaitée 3. En pratique, les systèmes ESP actuels détectent un écart de la trajectoire souhaitée 3 par le traitement d'une mesure de lacet 6. Plus le lacet 6 mesuré est important plus le véhicule 2 change d'orientation durant le virage 1. Typiquement, pour une trajectoire souhaitée 3 particulière, le véhicule 2 subit un lacet 6 particulier.

Trois grandes tendances sont visibles dans la valeur de lacet 6 durant un virage 1, c'est-à-dire un virage pris normalement sans qu'il y ait de survirage ou de sous virage. Dans une entrée 7 de virage 1, c'est-à-dire tant que le rayon de courbure du virage 1 augmente, le lacet 6 augmente. Dans le virage 1 à proprement parler, c'est-à-dire lorsque le rayon de courbure du virage 1 est sensiblement constant, la valeur de lacet 6 mesurée est sensiblement constante. Dans une sortie 8 de virage 1, c'est-à-dire lorsque le rayon de courbure du virage 1 diminue, la valeur de lacet 6 mesurée diminue jusqu'à atteindre une valeur nulle lorsque le véhicule 2 ne tourne plus.

Le système ESP 4 effectue un contrôle de la trajectoire réelle 5 par rapport à la trajectoire souhaitée 3. Pour cela, le procédé selon l'invention comporte une étape de détermination d'une mesure de lacet 6. Le système ESP 4 comporte une interface d'entrée, une interface de sortie, un bus de communication, un microprocesseur, une mémoire de donnée et une mémoire de programme. Le capteur de lacet est relié au système ESP 4. Des données de lacet, typiquement la mesure de lacet 6 du véhicule 2, sont transmises par le capteur de lacet au système ESP 4. Ces données de lacet sont reçues par l'interface d'entrée du système ESP 4. Ces données de lacet sont transmises de l'interface d'entrée à la mémoire de donnée et/ou au microprocesseur via le bus de communication Le microprocesseur calcule alors, en fonction d'un programme de correction contenu dans la mémoire de programme, ainsi que de données contenues dans la mémoire de donnée ou transmises depuis l'interface d'entrée, la correction à effectuer ainsi que des ordres permettant d'effectuer ladite correction. Les ordres définis par le microprocesseur du système ESP 4 sont envoyées depuis l'interface de sortie du système ESP 4 au groupe hydraulique de freinage. Les ordres reçus par le groupe hydraulique de freinage donnent lieu à une montée en pression hydraulique dudit groupe hydraulique de freinage. Cette montée en pression entraîne le freinage d'une ou plusieurs roues.

Dans les systèmes ESP actuels, ce calcul de correction effectue la comparaison entre le lacet 6 et une valeur seuil 9. La valeur seuil 9 correspond à une valeur de lacet arbitrairement choisie supérieure à la valeur de lacet de la trajectoire souhaitée 3. Lorsque le lacet 6 mesuré est supérieur à la valeur seuil 9, un véhicule 10 est en survirage, c'est-à-dire qu'il a tourné autour d'un axe vertical passant par son centre de gravité plus qu'il ne l'aurait du. Les systèmes ESP actuels ordonnent alors un freinage sur des roues extérieures 11 du véhicule 10 afin de créer une rotation inverse au lacet 6. Inversement, le sous virage est détecté par une mesure de lacet 6 inférieure à la valeur de lacet correspondant à la trajectoire souhaitée 3. Lors d'un sous virage, un véhicule 12 effectue un « tout droit ». Les systèmes ESP actuels ordonnent alors un freinage sur des roues intérieures 13 du véhicule 12 afin de donner une rotation plus importante au véhicule.

Cependant, la trajectoire réelle 5 ne peut pas se définir uniquement à partir du lacet 6. En effet, une trajectoire réelle 5 est aussi fonction d'une dérive 14 du véhicule 2. La dérive 14 en un point 15 du véhicule représente le rapport entre une vitesse latérale 16 du véhicule en ce point 15 et une vitesse longitudinale 17 du véhicule en ce point 15. Ainsi, il peut arriver qu'un véhicule 18 subisse à la fois du lacet durant un virage 1 et de la dérive.

Dans le cas ou le véhicule 18 subit une dérive 14 sur un essieu arrière 19 et en même temps une augmentation de son lacet 6 au dessus de la valeur seuil 9, le véhicule 18 part à la fois en survirage, car son lacet mesuré 6 est supérieur à la valeur seuil 9, et en sous virage, car il s'écarte de la trajectoire souhaitée 3. La présence d'un tel lacet 6 associé à une dérive 14 de l'essieu arrière 19 correspond à une ovalisation 20 de la trajectoire du véhicule 18. Typiquement dans une telle situation, l'essieu arrière 19 du véhicule 18 est plus éloigné de la trajectoire souhaitée 3 qu'un essieu avant 21 du véhicule 18.

La valeur de dérive 14 du véhicule 2 est estimée, contrairement au lacet 6. Cette estimation est réalisée à partir d'un modèle de véhicule 2. Typiquement, une série de tests effectués sur le véhicule 2 permet de définir une table de dérive. Cette table donne une valeur de dérive 14 en fonction des situations dans lesquelles se trouve le véhicule 2. Cette table de dérive est principalement établie en prenant en compte la vitesse du véhicule 2, les caractéristiques du véhicule 2 ainsi que l'angle d'inclinaison du volant.

La figure 2 représente un graphique du comportement du véhicule dans un système ESP classique sans ovalisation de la trajectoire, avec ovalisation de la trajectoire, et le comportement du véhicule avec le procédé selon l'invention avec une ovalisation de la trajectoire.

Un système ESP 4 calcule la trajectoire souhaitée 3 en fonction du lacet 6. En effet, selon l'orientation du volant, la vitesse du véhicule et les caractéristiques du véhicule, il est possible pour le système ESP 4 de calculer quel devrait être un lacet théorique 22 correspondant à un virage 1. Une courbe 23 d'évolution du lacet théorique présente ainsi durant un virage 1 une période de croissance 24, une période de stabilité 25 et une période de décroissance 26. Afin de détecter si il y a ou non survirage, la valeur seuil 9 est définie arbitrairement fixe et supérieure à la valeur du lacet théorique 22 durant la période stable 25 de la trajectoire souhaitée 3.

Lors d'un survirage, un lacet réel en survirage seul 27, mesuré par un capteur de lacet, subit une augmentation 28 telle que le lacet réel 27 dépasse la valeur seuil 9. Ce dépassement de la valeur seuil 9 entraîne une réaction du système ESP 4. Cette réaction correspond à une montée en pression 29 durant un survirage seul sur les groupes hydraulique de freinage des roues extérieures 11. Un retard 30 est visible entre le moment où le lacet réel 27 dépasse la valeur seuil 9 et le moment ou la montée en pression 29 a lieu. Ce retard 30 est imposé par les caractéristiques physiques du groupe hydraulique de freinage. Par exemple, le retard 30 peut représenter le laps de temps nécessaire pour fermer la communication en fluide entre une chambre de pression d'un maître cylindre et un réservoir. Une augmentation 31 de la pression 29 est calculée par le système ESP en fonction du lacet réel 27. La pression 29 réduit l'augmentation du lacet réel 27 puis fait diminuer 32 le lacet réel 27 en dessous de la valeur seuil 9. La pression 29 étant calculée à partir du lacet réel 27, lorsque le lacet réel 27 diminue, la pression 29 diminue 33 elle aussi. Typiquement le freinage des roues extérieures 11 provoqué par la montée en pression 29 remet le véhicule 10 sur la trajectoire souhaitée 3. Si une dérive 34 n'a pas augmenté après dépassement de la valeur seuil 9, le véhicule retourne bien sur la trajectoire souhaitée 3. Dans un simple survirage, le système ESP 4 selon l'invention traite l'écart de la trajectoire souhaitée 3 de la même manière qu'un système ESP classique.

Lors d'une ovalisation 20 de la trajectoire d'un véhicule, le capteur de lacet détecte une augmentation 35 d'un lacet réel 36 en ovalisation. Une augmentation 37 d'une dérive 38 en même temps que l'augmentation 35 du lacet réel 36 ne permet pas de détecter un réel écart de la trajectoire souhaitée car l'augmentation 35 du lacet réel 36 dans cette situation est faible. Cette augmentation 35 entraîne l'apparition d'un lacet réel 36 légèrement supérieur à la valeur de seuil 9.

Le système ESP traditionnel rectifie l'écart de la trajectoire en prenant en compte le lacet réel 36 comme dans le simple cas d'un survirage décrit ci-dessus. Le faible dépassement de la valeur seuil 9 par le lacet réel 36 donne lieu à une réaction de freinage qui se traduit par une faible montée en pression 39. Une réaction de freinage a alors lieu sur les roues extérieures du véhicule. Cette faible montée en pression 39 suffit à faire diminuer en 40 le lacet réel 36 en dessous de la valeur seuil 9. La pression hydraulique diminue 41 au fur et a mesure que la mesure de lacet réel 36 diminue. Une fois le lacet réel 36 redescendu en dessous de la valeur seuil 9, le système ESP n'ordonne plus de réaction de freinage. Cependant, la fin de la réaction de freinage ne permet pas de résoudre l'écart engendré par l'augmentation 37 de la dérive 38 par rapport à la trajectoire souhaitée. Typiquement, le véhicule subit bien le lacet 6 qu'il devrait subir durant un virage 1 pris normalement mais la dérive 38 fait suivre au véhicule une trajectoire réelle 5 différente de la trajectoire souhaitée 3. La montée en pression 39 pour corriger cet écart étant stoppée avec le retour en dessous de la valeur seuil 9 du lacet réel 36, la dérive 38 continue à augmenter sans être corrigée, entraînant ainsi un écart de la trajectoire souhaitée 3 de plus en plus important. Les systèmes ESP actuels sont donc incapables de gérer correctement une ovalisation de la trajectoire ayant pour cause un dépassement de la valeur seuil 9 du lacet réel 36 en même temps qu'une augmentation 37 de la dérive 38.

Pour régler ce problème, le procédé selon l'invention effectue une correction de trajectoire en fonction du lacet réel 36 en ovalisation de la trajectoire mais aussi en fonction d'une dérive 42 du véhicule.

Le procédé selon l'invention comporte une étape de détermination d'une valeur de dérive initiale 43. Préférentiellement cette dérive initiale 43 correspond à la dérive 42 à un instant 44 où le lacet réel 36 dépasse la valeur seuil 9. Le procédé selon l'invention comporte une étape de comparaison entre la dérive 42 et la dérive initiale 43. Si à partir de l'instant 44 la dérive 42 n'augmente pas au-delà de la dérive initiale 43, le procédé selon l'invention fonctionne de la même manière qu'un système ESP classique, c'est-à-dire en ordonnant une réaction de freinage ne prenant en compte que la différence entre le lacet réel 36 et la valeur seuil 9 uniquement. Cependant, si à partir de l'instant 44 la dérive 42 augmente 45 et est supérieure à la dérive initiale 43, la réaction de freinage effectuée sur les roues extérieures, c'est-à-dire une montée en pression 49, se fait à la fois en fonction du lacet réel 36 et en fonction de la dérive 42. Ainsi, si le lacet réel 36 diminue 46 sous la valeur seuil 9, alors le système ESP selon l'invention continue d'ordonner une réaction de freinage fonction de la dérive 42 uniquement. La pression 49 est donc toujours présente afin d'effectuer le freinage sur les roues extérieures du véhicule et rattraper ainsi le lacet réel 36 ainsi que la dérive 42 alors que le système ESP selon l'invention ne détecte plus de lacet réel 36 supérieur à la valeur seuil 9.

Avantageusement, la réaction de freinage est uniquement proportionnelle à la différence entre le lacet réel 36 et la valeur seuil 9 lorsque la dérive 42 est inférieure ou égale à la dérive initiale 43. De même, avantageusement, la réaction de freinage est uniquement proportionnelle à la différence entre la dérive 42 et la dérive initiale 43, si la dérive 42 est supérieure ou égale à la dérive initiale 43 et que le lacet réel 36 est repassée sous la valeur seuil 9. En outre, si le lacet réel 36 est supérieur à la valeur seuil et que la dérive 42 est supérieure à la dérive initiale 43, la réaction de freinage est proportionnelle à la somme de la différence entre le lacet réel 36 et la valeur seuil 9 et de la différence entre la dérive 42 et la dérive initiale 43.

Cette particularité du procédé selon l'invention permet au système ESP de réagir plus rapidement à une ovalisation de la trajectoire du véhicule. En effet, la réaction de freinage prenant en compte et la dérive 42 et le lacet réel 36, la réaction de freinage non seulement peut continuer après retour du lacet réel 36 sous la valeur seuil 9 mais, de plus, corrige la trajectoire réelle 5 directement aussi en fonction de l'augmentation de la dérive 42 et ce avant même que le lacet réel 36 ne repasse sous la valeur seuil 9.

Afin d'assouplir le freinage, c'est-à-dire que le conducteur ressente le moins possible la réaction de freinage, la fin de réaction de freinage est progressive jusqu'à ce que ladite réaction de freinage soit nulle. La fin de réaction de freinage est entendue comme la diminution 50 de pression 49 lorsque le lacet réel 36 est repassé en 44 sous la valeur seuil 9 et que la dérive 42 a diminué en 47 jusqu'à repasser en 48 sous la dérive initiale 43.

## Revendications

1. Procédé de correction automatique de trajectoire d'un véhicule (2), ledit véhicule comportant un dispositif ESP (4), comportant :
- une étape de détermination d'une mesure de lacet (6),
- une étape de comparaison de la mesure de lacet à une valeur seuil (9),
- une étape d'estimation d'une valeur de dérive (14),
**caractérisé en ce qu'**il comporte
- une étape de détermination d'une valeur de dérive initiale (43), correspondant à la dérive (42) à un instant (44) où le lacet réel (36) dépasse la valeur seuil (9),
- une étape de comparaison entre la dérive et de la dérive initiale,
- une étape de réaction de freinage correspondant à une montée en pression (29) hydraulique dans des systèmes hydrauliques de freinage, la réaction de freinage étant effectuée en fonction du lacet et de la dérive,
- une étape de maintien de la réaction de freinage en fonction de la dérive (42) uniquement si le lacet réel (36) diminue sous la valeur seuil (9).

2. Procédé selon la revendication 1, **caractérisé en ce que** lorsque le lacet est supérieur à la valeur seuil et que la dérive est inférieure à la dérive initiale, la réaction de freinage est fonction de la différence entre la mesure de lacet en cours et la valeur seuil.

3. Procédé selon l'une des revendications 1 à 2, **caractérisé en ce que** lorsque le lacet est supérieur à la valeur seuil et que la dérive est supérieure à la dérive initiale, la réaction de freinage est fonction de la différence entre la dérive et la dérive initiale et de la différence entre le lacet et la valeur seuil.

4. Procédé selon l'une des revendications 1 à 3, **caractérisé en ce que** lorsque le lacet redescend (46) sous la valeur seuil, si la dérive est supérieure ou égale à la dérive initiale, la réaction de freinage est fonction de la différence entre la dérive et la dérive initiale.

5. Procédé selon l'une des revendications 1 à 4, **caractérisé en ce que** la fin de réaction de freinage, lorsque le lacet est repassé sous la valeur seuil et que la dérive est inférieure à la dérive initiale, est progressive jusqu'à ce que ladite réaction de freinage soit nulle.

## Claims

1. Method for automatically correcting the trajectory of a vehicle (2), said vehicle comprising an ESP device (4), comprising:
- a step of determining a yaw measurement (6),
- a step of comparing the yaw measurement with a threshold value (9),
- a step of estimating a drift value (14), **characterized in that** it comprises
- a step of determining an initial drift value (43), corresponding to the drift (42) at a moment (44) when the real yaw (36) exceeds the threshold value (9),
- a step of comparing between the drift and the initial drift,
- a step of braking reaction corresponding to a rise in hydraulic pressure (29) in hydraulic braking systems, the braking reaction being carried out as a function of the yaw and the drift,
- a step of maintaining the braking reaction as function of the drift (42) only if the real yaw (36) falls below the threshold value (9).

2. Method according to Claim 1, **characterized in that**, when the yaw is greater than the threshold value and the drift is less than the initial drift, the braking reaction is a function of the difference between the current yaw measurement and the threshold value.

3. Method according to one of Claims 1 or 2, **characterized in that**, when the yaw is greater than the threshold value and the drift is greater than the initial drift, the braking reaction is a function of the difference between the drift and the initial drift and of the difference between the yaw and the threshold value.

4. Method according to one of Claims 1 to 3, **characterized in that**, when the yaw again falls (46) below the threshold value, if the drift is greater than or equal to the initial drift, the braking reaction is a function of the difference between the drift and the initial drift.

5. Method according to one of Claims 1 to 4, **characterized in that** the end of braking reaction, when the yaw has returned below the threshold value and the drift is less than the initial drift, is progressive until said braking reaction is zero.

## Patentansprüche

1. Verfahren zur automatischen Kurskorrektur eines Fahrzeugs (2), wobei das Fahrzeug eine ESP-Vorrichtung (4) aufweist, das aufweist:
- einen Schritt der Bestimmung einer Giermessung (6),
- einen Schritt des Vergleichs der Giermessung mit einem Schwellwert (9),
- einen Schritt der Schätzung eines Driftwerts (14),
**dadurch gekennzeichnet, dass** es aufweist
- einen Schritt der Bestimmung eines Anfangsdriftwerts (43), der der Drift (42) in einem Zeitpunkt (44) entspricht, in dem das reale Gieren (36) den Schwellwert (9) überschreitet,
- einen Schritt des Vergleichs zwischen der Drift und der Anfangsdrift,
- einen Schritt der Bremsreaktion entsprechend einem Anstieg des Hydraulikdrucks (29) in Bremshydrauliksystemen, wobei die Bremsreaktion abhängig vom Gieren und von der Drift durchgeführt wird,
- einen Schritt des Haltens der Bremsreaktion abhängig von der Drift (42) nur dann, wenn das reale Gieren (36) unter den Schwellwert (9) sinkt.

2. Verfahren nach Anspruch 1, **dadurch gekennzeichnet, dass**, wenn das Gieren größer als der Schwellwert und die Drift kleiner als die Anfangsdrift ist, die Bremsreaktion von der Differenz zwischen der laufenden Giermessung und dem Schwellwert abhängt.

3. Verfahren nach einem der Ansprüche 1 bis 2, **dadurch gekennzeichnet, dass**, wenn das Gieren größer als der Schwellwert und die Drift größer als die Anfangsdrift ist, die Bremsreaktion von der Differenz zwischen der Drift und der Anfangsdrift und der Differenz zwischen dem Gieren und dem Schwellwert abhängt.

4. Verfahren nach einem der Ansprüche 1 bis 3, **dadurch gekennzeichnet, dass**, wenn das Gieren wieder unter den Schwellwert sinkt (46), wenn die Drift größer als die oder gleich der Anfangsdrift ist, die Bremsreaktion von der Differenz zwischen der Drift und der Anfangsdrift abhängt.

5. Verfahren nach einem der Ansprüche 1 bis 4, **dadurch gekennzeichnet, dass** das Ende der Bremsreaktion, wenn das Gieren wieder unter den Schwellwert gesunken und die Drift geringer als die Anfangsdrift ist, progressiv ist, bis die Bremsreaktion Null ist.
